# EUROPÄISCHE PATENTSCHRIFT

(11) **EP 0 785 108 B1**
(45) Veröffentlichungstag und Bekanntmachung des Hinweises auf die Patenterteilung: **01.12.1999**
(21) Anmeldenummer: 97100228.2
(22) Anmeldetag: 09.01.1997
(51) Int. Cl.: B60R 21/20, F16B 21/08, F16B 5/06

(54) **Kopplungseinrichtung zum lösbaren Verbinden zweier Bauteile**
Coupling device for releasably connecting of two elements
Dispositif de verrouillage pour l'assemblage de façon démontable de deux éléments

(30) Priorität: 22.01.1996 DE 19602155
(43) Veröffentlichungstag der Anmeldung: 23.07.1997
(73) Patentinhaber: Fairchild Fasteners Europe - Camloc GmbH, 65779 Kelkheim (DE)
(72) Erfinder: Hübsch, Christian, Dipl. Ing, 85646 Anzing (DE); Stölken, Jochen, Dipl. Ing, 65719 Hofheim (DE)
(74) Vertreter: KEIL & SCHAAFHAUSEN

(56) Entgegenhaltungen:
- EP-A- 0 672 558

## Beschreibung

Die Erfindung bezieht sich auf eine Kopplungseinrichtung zum lösbaren Verbinden zweier Bauteile, insbesondere zum Befestigen eines Airbag an einer Lenkradspeiche eines Kraftfahr zeugs, mit einem Verbindungszapfen mit einem in zueinander ausgerichtete Öffnungen der Bauteile einsetzbaren Zapfenschaft, welcher sich einerseits, z.B. mittels eines Zapfenkopfes, an eine Außenseite des ersten Bauteils, z.B. auf der Rückseite einer Lenkradspeiche, und andererseits, z.B. über ein Flanschelement, auf eine Außenseite des zweiten Bauteils, z.B. auf der Bodenfläche des Airbag-Gehäuses abstützt, und mit einer auf dem Zapfenschaft aufgenommenen, zwischen dem ersten Bauteil und dem Zapfenschaft wirksame Arretierungsmittel aufweisenden Halteeinrichtung.

Aus der DE-U-9 402 753 ist eine Verschlußeinrichtung dieser Art bekannt.

Aufgabe der vorliegenden Erfindung ist es, eine Kopplungseinrichtung der eingangs genannten Art vorzuschlagen, welche hinsichtlich einfachem Aufbau, der Möglichkeit schneller und sicherer Montage und Demontage sowie der Fähigkeit hohe Zug- und Druckkräfte aufnehmen zu können, weiter verbessert ist.

Diese Aufgabe wird erfindungsgemäß im wesentlichen dadurch gelöst, daß die Halteeinrichtung eine auf dem Zapfenschaft aufgenommene, sich einerseits an dem Flanschelement und andererseits an dem Zapfen, z.B. an dem Zapfenkopf, abstützende Buchse aus nachgiebigen Material, wie Weichmetall, und eine an dem ersten Bauteil festlegbare, als das Arretierungsmittel dienende Sperrscheibe aufweist, durch deren Öffnung der Zapfen mit der darauf aufgenommenen Buchse hindurchsteckbar ist und welche sich bei Zugbeanspruchung des Zapfens in Richtung des zweiten Bauteils mit einer die Öffnung begrenzenden Sperrkante in das Material der Buchse eindrückt.

Mit Hilfe einer solchen Kopplungseinrichtung ist ein schnelles und sicheres Befestigen des ersten Bauteils an dem zweiten Bauteil möglich. Die Befestigung erfolgt durch Einstecken des sich an dem zweiten Bauteil abstützenden, die Buchse tragenden Zapfens durch die Öffnung des ersten Bauteils und die Öffnung der auf der gegenüberliegenden Seite des ersten Bauteils gehaltenen Sperrscheibe mit bei der Montage einfacher gradliniger Fügebewegung. Das von der Sperrscheibe gebildete Arretiermittel läßt zwar bei Montage das Durchstecken des Zapfens zu, bei Zugbeanspruchung auf den Zapfen in entgegengesetzte Richtung krallt sich jedoch die Sperrkante der Sperrscheibe in das weiche Material der Buchse ein, so daß die axiale Verbindung mit zunehmender Zugkraft noch fester wird. Die Demontage kann einfach dadurch bewerkstelligt werden, daß der Verbindungszapfen, welcher bspw. über eine Schraubverbindung mit dem sich auf der Oberseite des zweiten Bauteils abstützenden Flanschelement lösbar verbunden ist, gelöst und aus der Kopplungseinrichtung herausgezogen wird.

Die Sicherung der Kopplungseinrichtung wird dann noch weiter verbessert, wenn der Verbindungszapfen als Gewindezapfen ausgebildet ist. Dann drückt sich nämlich bei Zugbeanspruchung das nachgiebige Material der auf dem Zapfen gelagerten Buchse unter der Einwirkung der Sperrkante der Sperrscheibe in die Gewindegänge ein.

Die Sperrscheibe kann bei einer besonderen Ausgestaltung der Erfindung bspw. mittels eines, z.B. einstückig mit dieser ausgebildeten Käfigelements, vorzugsweise mit Radialspiel, an dem ersten Bauteil gehalten sein, wobei das Radialspiel für einen Toleranzausgleich sorgt.

Das Käfigelement kann bspw. mittels Biegelaschen an dem ersten Bauteil festlegbar oder, was die Montage noch mehr erleichtert, in die Montageöffnung des ersten Bauteils einklipsbar ausgebildet sein.

Mit der Erfindung wird ferner vorgeschlagen, daß sich das zweite Bauteil an dem ersten Bauteil über ein Federelement abstützt. Hierdurch wird Spiel vermieden, das durch die Elastizität der einzelnen Bauteile entstehen könnte.

In besonderer Ausgestaltung des Erfindungsgedankens kann das Federelement eine Tellerfeder sein, welche z.B. mittels einer Haltescheibe, die auf die Buchse aufgepreßt ist, gehalten wird.

Es ist aber bspw. auch möglich, daß das Federelement, z.B. über Niete, an dem Flanschelement befestigt ist und mittels Federarmen durch Aussparungen des zweiten Bauteils hindurchgreift.

Die lösbare Befestigung des Zapfens an dem Flanschelement kann in besonderer Ausgestaltung der Erfindung, z.B. über eine mit dem Flanschelement fest verbundene bzw., noch einfacher, als Gewindedurchzug des Flanschelements selbst ausgebildete Mutter, verschraubt sein.

Zur einfacheren Montage an Ort und Stelle kann in teilweiser Vormontage das Flanschelement bspw. in das zweite Bauteil, z.B. in den Boden des Airbag-Gehäuses, eincrimpbar sein.

Die Montage und Demontage der erfundenen Kopplungseinrichtung gestaltet sich dann besonders einfach, wenn Zapfen, Flanschelement, Buchse und gegebenenfalls Federelement zu einem einheitlich handhabbaren und mit dem zweiten Bauteil verbindbaren vormontierten Kopplungsoberteil zusammengefaßt sind und/oder das Käfigelement und die Sperrscheibe zu einem einheitlich handhabbaren und mit dem ersten Bauteil verbindbaren vormontierten oder einteilig ausgebildeten Kopplungsunterteil zusammengefaßt sind.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von deren Zusammenfassung in einzelnen Ansprüchen oder deren Rückbeziehung.

Es zeigen:
- Fig. 1: Die erfindungsgemäße Kopplungseinrichtung gemäß einem ersten Ausführungsbeispiel montiert im Vertikalschnitt (wobei Käfig und Sperrscheibe nicht geschnitten dargestellt sind),
- Fig. 2: eine Schnittdarstellung entsprechend Fig. 1 für eine andere Ausführungsform der Erfindung,
- Fig. 3: eine Draufsicht der Kopplungseinrichtung gemäß Fig. 2 aus Richtung III gesehen,
- Fig. 4: eine Draufsicht des ersten Bauteils (einer Lenkradspeiche) im Bereich der Montageöffnung, in welche der Käfig mit der Sperrscheibe eingeklipst ist,
- Fig. 5a u. b: schematisch den Einfügevorgang des Verschlußoberteils in das zweite Bauteil (das Airbag-Gehäuse) bei einer Kopplungseinrichtung gemäß Fig. 2,
- Fig. 6a - 6c: den Einfügevorgang des Käfigs mit Sperrscheibe in die Montageöffnung des ersten Bauteils (der Lenkradspeiche) bei einer Kopplungseinrichtung gemäß Fig. 2,
- Fig. 7: maßstabsgerecht zu den Fig. 6a - 6c die Draufsicht gemäßt Fig. 4, und
- Fig. 8a u. 8b: den Zusammenfügevorgang von erstem und zweitem Bauteil (Lenkradspeiche und Airbag).

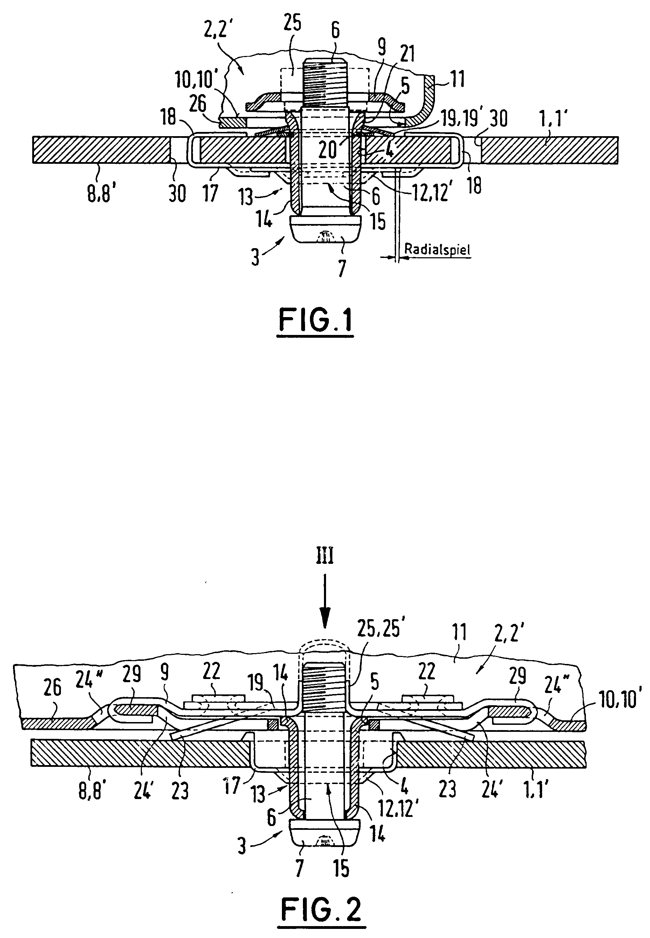

Die in Fig. 1 dargestellte Kopplungseinrichtung dient dem lösbaren Verbinden zweier Bauteile 1 und 2, bspw. dem Befestigen eines Airbag 2' an einer Lenkradspeiche 1' eines Kraftfahrzeugs. Die Kopplungseinrichtung weist einen Verbindungszapfen 3 auf, dessen Zapfenschaft 6 in die zueinander ausgerichteten Montageöffnungen 4 und 5 der Bauteile 1 und 2 einsetzbar ist. Der Verbindungszapfen 3 stützt sich einerseits, z.B. mittels eines Zapfenkopfes 7, an einer Außenseite 8 des ersten Bauteils 1, z.B. auf der Rückseite 8' einer Lenkradspeiche 1', und andererseits, z.B. über ein Flanschelement 9, auf eine Außenseite 10 des zweiten Bauteils 2, z.B. auf der Bodenfläche 10' eines Airbag-Gehäuses 11, ab.

Auf dem Zapfenschaft 6 ist eine Halteeinrichtung 13 aufgenommen, welche zwischen dem ersten Bauteil 1 und dem Zapfenschaft 6 wirksame Arretierungsmittel aufweist. Die Halteeinrichtung 13 weist eine auf dem Zapfenschaft 6 aufgenommene Buchse 14 aus nachgiebigem Material, wie Weichmetall, auf, welche sich einerseits an dem Flanschelement 9 und andererseits an dem Zapfen 3, z.B. an dem Zapfenkopf 7, abstützt. Die Halteeinrichtung 13 weist ferner eine als die Arretierungsmittel 12 dienende Sperrscheibe 12' auf, durch deren Öffnung 15 der Zapfen 3 mit der darauf aufgenommenen Buchse 14 hindurchsteckbar ist. Bei Zugbeanspruchung des Zapfens 3 in Richtung des zweiten Bauteils 2 drückt sich eine die Öffnung 15 begrenzende Sperrkante 16 der Sperrscheibe 12' in das Material der Buchse 14 ein, so daß die axiale Festlegung des Verbindungszapfens 3 in der Kopplungseinrichtung noch verbessert wird.

Der Verbindungszapfen 3 ist als Gewindezapfen ausgebildet, so daß er mit dem Ende des Zapfenschaftes 6 in eine Mutter 25 eingeschraubt werden kann. Die Mutter 25 kann ein besonderes Bauteil sein, welches sich auf der Oberseite des Flanschelements 9 abstützt, sie kann aber bspw. auch mit dem Flanschelement 9 als Stanzeinpressmutter (wie dargestellt) oder als Nietmutter, Schweißmutter, Bördelmutter oder dergleichen mit dem Flanschelement 9 fest verbunden sein.

Die Sperrscheibe 12' ist als gesondertes Bauteil mittels eines Käfigelements 17 an dem ersten Bauteil 1 gehalten, indem Biegelaschen 18 durch Öffnungen des ersten Bauteils 1 hindurchgreifen. Diese Art der Festlegung des Käfigelements 17 in dem ersten Bauteil 1 läßt ein Radialspiel zu, welches die Montage der Kupplungseinrichtung in Beziehung zu den Montageöffnungen 4, 5 der beiden Bauteile 1, 2 erleichtert.

Das zweite Bauteil 2 stützt sich über ein als Tellerfeder 19' ausgebildetes Federelement 19 auf dem ersten Bauteil ab 1, um Spiel zu vermeiden, das durch die Elastizität der Bauteile entstehen könnte. Die Tellerfeder 19' ist z.B. mittels einer an dem ersten Bauteil 1 anliegenden Haltescheibe 20 an einer Ausweitung 21 der Buchse 14 gehalten.

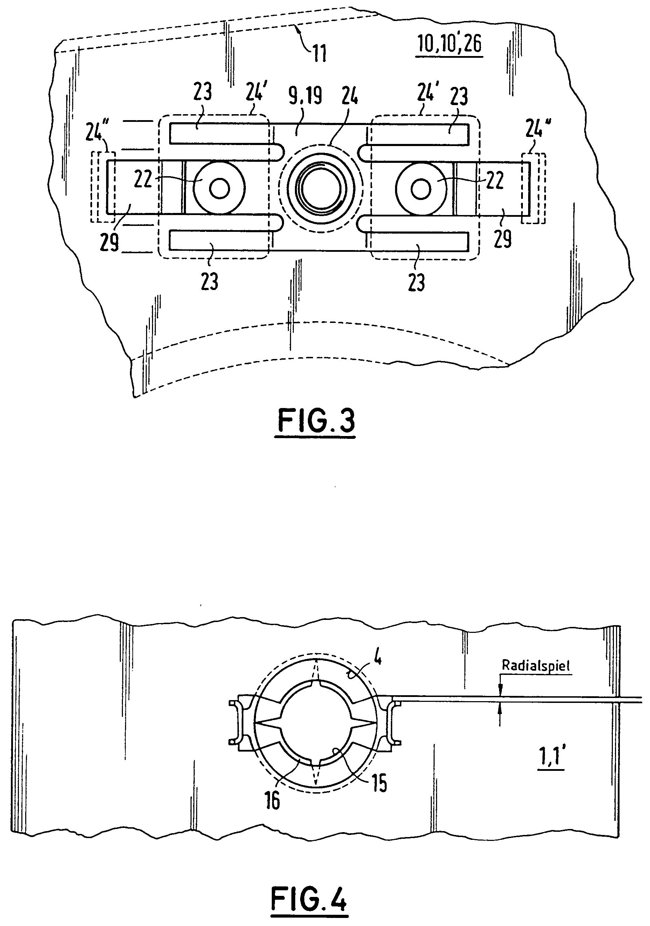

Bei der Ausführungsform der Kopplungseinrichtung gemäß Fig. 2 ist die Sperrscheibe 12' einstückig mit dem Käfigelement 17 ausgebildet, welches seinerseits in die Montageöffnung 4 des ersten Bauteils 1 einklipsbar ist. Entsprechend der Darstellung in Fig. 4 ist auch hier ein Radialspiel gewährleistet. Das Federelement 19 ist über z.B. aus dem Material des Flanschelements 9 gezogenen Niete 22 an dem Flanschelement 9 befestigt. Das Federelement 19 weist, wie insbesondere aus Fig. 3 ersichtlich, vier Federarme 23 auf, welche durch Aussparungen 24' des zweiten Bauteils 2 hindurchgreifen und sich in dem in Fig. 2 gezeigten montierten Zustand auf der Oberseite des ersten Bauteils 1 abstützen. Das Flanschelement 9 ist mit dem Verbindungszapfen 3 über einen Gewindedurchzug 25' des Flanschelements 9 verschraubt. Entsprechend der gestrichelten Darstellung kann der Gewindezug 25' auch oben geschlossen sein. Das Flanschelement 9 ist in das zweite Bauteil 2, z.B. in den Boden 26 des Airbag-Gehäuses 11, eingecrimpt, indem entsprechende Crimparme 29, Aussparungen 24'' des zweiten Bauteils 2 durchgreifen. Um die ebene Anlage des zweiten Bauteils 2 an dem ersten Bauteil 1 nicht zu beeinträchtigen, ist das zweite Bauteil 2 angrenzend an die äußeren Aussparungen 24'' zur Aufnahme der nach innen umgebogenen Crimplaschenendabschnitte aufgewölbt.

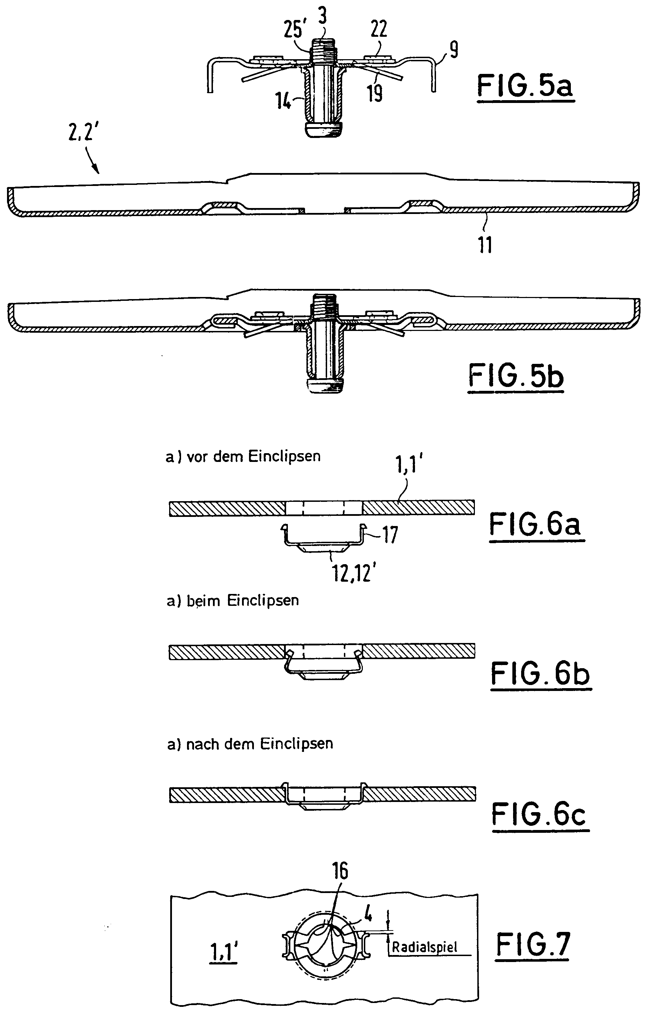

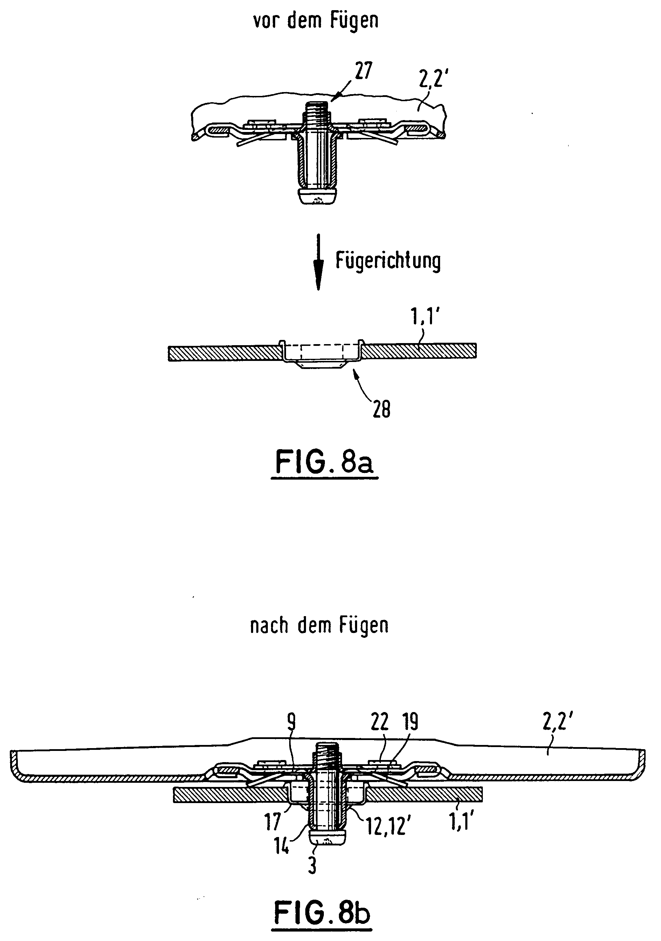

Wie aus den Fig. 5a bis 6c ersichtlich, sind bei der Ausführungsform gemäß Fig. 2 Zapfen 3, Flanschelement 9, Buchse 14 und Federelement 19 zu einem einheitlich handhabbaren und mit dem zweiten Bauteil 2 verbindbaren vormontierten Kopplungsoberteil 27 zusammengefaßt, ebenso wie das Käfigelement 17 und die Sperrscheibe 12' zu einem einheitlich handhabbaren und mit dem ersten Bauteil 1 verbindbaren einteilig ausgebildeten Kopplungsunterteil zusammengefaßt sind. Entsprechend der Darstellung können dann sowohl das Kopplungsoberteil 27 an dem zweiten Bauteil 2 als auch das Kopplungsunterteil 28 an dem ersten Bauteil 1 vormontiert und beide so vormontierten Bauelemente gemäß den Fig. 8a und 8b auf einfache Weise endgültig zusammengefügt werden. Eine Demontage ist auf einfache Weise dadurch möglich, daß der als Gewindebolzen ausgebildete Verbindungszapfen 3 aus der Kopplungseinrichtung herausgeschraubt wird.

Die erfindungsgemäße Kopplungseinrichtung kann einer einmalig aufgebrachten hohen Axialkraft standhalten, indem sich die Sperrscheibe 12' mit ihrer Sperrkante 16 in die Buchse 14 aus nachgiebigen Material, wie Weichmetall eingräbt. Es entstehen Furchen, welche sich bis in die Gewindegänge des Zapfenschaftes 6 eindrücken.

### Bezugszeichenliste

- 1: erstes Bauteil
- 1': Lenkradspeiche
- 2: zweites Bauteil
- 2': Airbag
- 3: Verbindungszapfen
- 4: Öffnung des ersten Bauteils
- 5: Öffnung des zweiten Bauteils
- 6: Zapfenschaft
- 7: Zapfenkopf
- 8: Außenseite des ersten Bauteils
- 8': Rückseite einer Lenkradspeiche
- 9: Flanschelement
- 10: Außenseite des zweiten Bauteils
- 10': Bodenfläche des Airbag-Gehäuses
- 11: Airbag-Gehäuse
- 12: Arretierungsmittel
- 12': Sperrscheibe
- 13: Halteeinrichtung
- 14: Buchse
- 15: Öffnung der Sperrscheibe
- 16: Sperrkante
- 17: Käfigelement
- 18: Biegelaschen
- 19: Federelement
- 19': Tellerfeder
- 20: Haltescheibe
- 21: Aufweitung
- 22: Niete
- 23: Federarme
- 24: Aussparungen des zweiten Bauteils
- 25: Mutter
- 25': Gewindedurchzug
- 26: Boden
- 27: Kopplungsoberteil
- 28: Kopplungsunterteil
- 29: Crimplaschen
- 30: Öffnungen

## Patentansprüche

1. Kopplungseinrichtung zum lösbaren Verbinden zweier Bauteile (1,2), insbesondere zum Befestigen eines Airbag (2') an einer Lenkradspeiche (1') eines Kraftfahrzeugs, mit einem Verbindungszapfen (3) mit einem in zueinander ausgerichtete Öffnungen (4, 5) der Bauteile (1, 2) einsetzbaren Zapfenschaft (6), welcher sich einerseits, z.B. mittels eines Zapfenkopfes (7), an einer Außenseite (8) des ersten Bauteils (1), z.B. auf der Rückseite (8') einer Lenkradspeiche (1'), und andererseits, z.B. über ein Flanschelement (9), auf einer Außenseite (10) des zweiten Bauteils (2), z.B. auf der Bodenfläche (10') eines Airbag-Gehäuses (11) abstützt, und mit einer auf dem Zapfenschaft (6) aufgenommenen, zwischen dem ersten Bauteil (1) und dem Zapfenschaft (6) wirksame Arretierungsmittel (12) aufweisenden Halteeinrichtung (13), **dadurch gekennzeichnet**, daß die Halteeinrichtung (13) eine auf dem Zapfenschaft (6) aufgenommene, sich einerseits an dem Flanschelement (9) und andererseits an dem Verbindungszapfen (3), z.B. an dem Zapfenkopf (7), abstützende Buchse (14) aus nachgiebigem Material, wie Weichmetall, und eine an dem ersten Bauteil (1) festlegbare, als die Arretierungsmittel (12) dienende Sperrscheibe (12') aufweist, durch deren Öffnung (15) der Verbindungszapfen (3) mit der darauf aufgenommenen Buchse (14) hindurchsteckbar ist und welche sich bei Zugbeanspruchung des Verbindungszapfens (3) in Richtung des zweiten Bauteils (2) mit einer die Öffnung (15) begrenzenden Sperrkante (16) in das Material der Buchse (14) eindrückt.

2. Kopplungseinrichtung nach Anspruch 1, **dadurch gekennzeichnet**, daß der Verbindungszapfen (3) als Gewindezapfen ausgebildet ist.

3. Kopplungseinrichtung nach Anspruch 1 oder 2, **dadurch gekennzeichnet**, daß die Sperrscheibe (12') mittels eines z.B. einstückig mit dieser ausgebildeten Käfigelements (17), vorzugsweise mit Radialspiel, an dem ersten Bauteil (1) gehalten ist.

4. Kopplungseinrichtung nach einem der Ansprüche 1 bis 3, **dadurch gekennzeichnet**, daß das Käfigelement (17) mittels Biegelaschen (18) an dem ersten Bauteil (1) festlegbar oder in die Öffnung (4) des ersten Bauteils (1) einklipsbar ausgebildet ist.

5. Kopplungseinrichtung nach einem der vorhergehenden Ansprüche**, dadurch gekennzeichnet**, daß das zweite Bauteil (2) an dem ersten Bauteil (1) über ein Federelement (19) abgestützt ist.

6. Kopplungseinrichtung nach einem der vorgehenden Ansprüche, **dadurch gekennzeichnet**, daß das Federelement (19) eine Tellerfeder (19') ist, welche, z.B. mittels einer Haltescheibe (20), die auf die Buchse (14) aufgepreßt ist, gehalten wird.

7. Kopplungseinrichtung nach einem der vorhergehenden Ansprüche, **dadurch gekennzeichnet**, daß das Federelement (19), z.B. über Niete (22), an dem Flanschelement (9) befestigt ist und mittels Federarmen (23) durch Aussparungen (24) des zweiten Bauteils (2) hindurchgreift.

8. Kopplungseinrichtung nach einem der vorhergehenden Ansprüche, **dadurch gekennzeichnet**, daß das Flanschelement (9) mit dem Verbindungszapfen (3), z.B. über eine mit dem Flanschelement (9) fest verbundene bzw. als Gewindedurchzug (25') des Flanschelements (9) ausgebildete Mutter (25), verschraubt ist.

9. Kopplungseinrichtung nach einem der vorhergehenden Ansprüche, **dadurch gekennzeichnet**, daß das Flanschelement (9) in das zweite Bauteil (2), z.B. in den Boden (26) des Airbag-Gehäuses (11), eincrimpbar ist.

10. Kopplungseinrichtung nach einem der vorhergehenden Ansprüche, **dadurch gekennzeichnet**, daß Verbindungszapfen (3), Flanschelement (9), Buchse (14) und gegebenenfalls Federelement (19) zu einem einheitlich handhabbaren und mit dem zweiten Bauteil (2) verbindbaren vormontierten Kopplungsoberteil (27) zusammengefaßt sind.

11. Kopplungseinrichtung nach einem der Ansprüche 1 - 10, **dadurch gekennzeichnet**, daß das Käfigelement (17) und die Sperrscheibe (12') zu einem einheitlich handhabbaren und mit dem ersten Bauteil (1) verbindbaren vormontierten oder einteilig ausgebildeten Kopplungsunterteil (28) zusammengefaßt sind.

## Claims

1. Coupling device for releasably connecting two components (1, 2), in particular for fastening an airbag (2') to a steering wheel spoke (1') of a vehicle, comprising a connecting plug (3) with a plug shaft (6) insertible into openings (4, 5) of the components (1, 2) being aligned towards each other, the plug shaft (6) on the one hand supporting itself, e.g. by means of a plug head (7) to an outer surface (8) of the first component (1), e.g. at the rear side (8') of a steering wheel spoke (1'), and on the other hand, e.g. by means of a flange element (9), at an outer surface (10) of the second component (2), e.g. at the bottom surface (10') of an airbag housing (11), and holding device (13) being placed on the plug shaft (6) and comprising arresting means (13) being effective between the first component (1) and the plug shaft (6), **characterized in** that the holding device (13) comprises a hub (14) of elastic material such as soft metal being placed on the plug shaft (6), on the one hand supporting itself at the flange element (9) and on the other hand at the connecting plug (3), e.g. at the plug head (7), and a locking disk (12') fastenable to the first component (1) and serving as arresting means (12), through the opening (15) of which the connecting plug (3) with the hub (14) placed thereon is insertible and which presses itself into the material of the hub (14) under tensile load of the connecting plug (3) in the direction of the second component (2) with a locking edge (16) limiting the opening (15).

2. Coupling device according to claim 1, **characterized in** that the connecting plug (3) is provided as a threaded pin.

3. Coupling device according to claim 1 or 2, **characterized in** that the locking disk (12') is held, preferably with radial play, to the first component (1) by means of a cage element (17) being e.g. provided in one piece with said locking disk (12').

4. Coupling device according to one of claims 1 to 3, **characterized in** that the cage element (17) is designed to be attachable to the first component (1) by means of bending tongues (18) or to be clipped into the opening (4) of the first component (4).

5. Coupling device according to one of the preceding claims, **characterized in** that the second component (2) is supported at the first component (1) by means of a spring element (19).

6. Coupling device according to one of the preceding claims, **characterized in** that the spring element (19) is a plate spring (19') which is held e.g. by means of a holding disk (20) being pressed onto the hub (14).

7. Coupling device according to one of the preceding claims, **characterized in** that the spring element (19) is attached to the flange element (9) e.g. by means of a rivet (22) and reaches through recesses (24) of the second component (2) by means of spring arms (23).

8. Coupling device according to one of the preceding claims, **characterized in** that the flange element (9) is screwed together with the connecting plug (3), e.g. by means of a nut (25) fixedly connected with the flange element (9) or provided as a thread passage (25') of the flange element (9).

9. Coupling device according to one of the preceding claims, **characterized in** that the flange element (9) is incrimpable into the second component (2), e.g. into the bottom (26) of the airbag housing (11).

10. Coupling device according to one of the preceding claims, **characterized in** that connecting plug (3), flange element (9), hub (14) and if need be spring element (19) are combined to a pre-assembled upper coupling part (27) being operable and attachable to the second component (2) as a whole.

11. Coupling device according to one of claims 1 - 10, **characterized in** that the cage element (17) and the locking disk (12') are combined to a pre-assembled or one-piece lower coupling part (28) being operable and attachable to the first component (1) as a whole.

## Revendications

1. Dispositif de verrouillage pour l'assemblage de façon démontable de deux éléments (1, 2), notamment pour la fixation d'un coussin gonflable de sécurité (2') sur un rayon de volant de direction (1') d'un véhicule automobile, avec un tourillon de raccordement (3) muni d'une tige de tourillon (6) insérable dans des ouvertures (4, 5) des éléments (1, 2) tournées les unes vers les autres, tige qui s'appuie d'une part, par ex. au moyen d'une tête de tourillon (7), sur le côté extérieur (8) du premier élément (1), par ex. sur le dos (8') d'un rayon de volant de direction (1'), et d'autre part, par ex. à l'aide d'un élément à bride (9), sur un côté extérieur (10) du second élément (2), par ex. sur la surface du fond (10') d'un boîtier de coussin gonflable de sécurité (11), et avec un dispositif de retenue (13) présentant un moyen de blocage (12) logé sur la tige de tourillon (6) et agissant entre le premier élément (1) et la tige de tourillon (6), **caractérisé en ce que** le dispositif de retenue (13) présente une douille (14) placée sur la tige de tourillon (6) et s'appuyant d'une part sur l'élément à bride (9) et d'autre part sur le tourillon de raccordement (3), par ex. sur la tête de tourillon (7), composée d'un matériau souple, comme du métal doux, et un disque de blocage (12') pouvant être fixé sur le premier élément (1) et servant de moyen d'arrêt (12), le tourillon de raccordement (3), avec la douille (14) placée dessus, étant insérable dans l'ouverture (15) de ce disque, et lequel s'enfonce dans le matériau de la douille (14) avec un bord de blocage (16) limitant l'ouverture (15) lors de l'effort de traction du tourillon de raccordement (3) en direction du second élément (2).

2. Dispositif de verrouillage selon la revendication 1, **caractérisé en ce que** le tourillon de raccordement (3) est formé comme une goupille filetée.

3. Dispositif de verrouillage selon la revendication 1 ou 2, **caractérisé en ce que** le disque de blocage (12') est maintenu sur le premier élément (1) au moyen d'un élément en cage (17) formé par ex. d'une seule pièce avec ce disque, de préférence avec un jeu radial.

4. Dispositif de verrouillage selon l'une des revendications 1 à 3, **caractérisé en ce que** l'élément en cage (17) est formé de façon à pouvoir être fixé sur le premier élément (1) au moyen de colliers coudés (18) ou à être encliquetable dans l'ouverture (4) du premier élément (1).

5. Dispositif de verrouillage selon l'une des revendications précédentes, **caractérisé en ce que** le second élément (2) s'appuie sur le premier élément (1) à l'aide d'un élément à ressort (19).

6. Dispositif de verrouillage selon l'une des revendications précédentes, **caractérisé en ce que** l'élément à ressort (19) est un ressort à disque (19'), lequel est maintenu par exemple au moyen d'un disque de maintien (20) pressé sur la douille (14).

7. Dispositif de verrouillage selon l'une des revendications précédentes, **caractérisé en ce que** l'élément à ressort (19) est fixé sur l'élément à bride (9) par ex. à l'aide de rivets (22) et s'engage dans des évidements (24) du second élément (2) au moyen de bras à ressorts (23).

8. Dispositif de verrouillage selon l'une des revendications précédentes, **caractérisé en ce que** l'élément à bride (9) est vissé avec le tourillon de raccordement (3), par ex. à l'aide d'un écrou (25) raccordé de façon fixe à l'élément à bride (9) ou formé comme passage en filet (25') de l'élément à bride (9).

9. Dispositif de verrouillage selon l'une des revendications précédentes, **caractérisé en ce que** l'élément à bride (9) peut être inséré dans le second élément (2), par exemple dans le fond (26) du carter (11) du coussin gonflable de sécurité.

10. Dispositif de verrouillage selon l'une des revendications précédentes, **caractérisé en ce que** le tourillon de raccordement (3), l'élément à bride (9), la douille (14) et, le cas échéant l'élément à ressort (19), sont regroupés en une partie supérieure de verrouillage (27) pré-montée, pouvant être manipulée comme une unité et raccordée au second élément (2).

11. Dispositif de verrouillage selon l'une des revendications 1 à 10, **caractérisé en ce que** l'élément en cage (17) et le disque de blocage (12') sont regroupés en une partie inférieure de verrouillage (28) formée en une seule pièce ou pré-montée, pouvant être manipulée comme une unité et raccordée au premier élément (1).
